# EUROPÄISCHE PATENTSCHRIFT

(11) **EP 3 000 578 B1**
(45) Veröffentlichungstag und Bekanntmachung des Hinweises auf die Patenterteilung: **14.03.2018**
(21) Anmeldenummer: 15186371.9
(22) Anmeldetag: 23.09.2015
(51) Int. Cl.: B29C 45/14, B29C 37/00

(54) **VERFAHREN ZUM HERSTELLEN EINER ANORDNUNG MIT EINEM ROHRKÖRPER**
METHOD FOR PRODUCING AN ASSEMBLY COMPRISING A TUBULAR BODY
PROCEDE DE FABRICATION D'UN SYSTEME DOTE D'UN CORPS CREUX

(30) Priorität: 24.09.2014 DE 102014219308
(43) Veröffentlichungstag der Anmeldung: 30.03.2016
(73) Patentinhaber: Mahle International GmbH, 70376 Stuttgart (DE)
(72) Erfinder: BONPAIN, Benedict, 66539 Neunkirchen (DE); DAUBITZER, Nikolaus, 70376 Stuttgart (DE); GÖRLICH, Rudolf, 74177 Bad Friedrichshall (DE); HERRMANN, Hans-Georg, 66132 Saarbrücken (DE); MOSER, Michael, 73479 Ellwangen (DE); QUIRIN, Steven, 66740 Saarlouis (DE); WEINMANN, Dominique, 72108 Rottenburg (DE); SAILER, Carolin, 72119 Ammerbuch (DE); SAUTTER, Nic, 73207 Plochingen (DE); SCHALL, Volker, 71282 Hemmingen (DE); STOMMEL, Markus, 66386 St. Ingbert (DE); WIEBELT, Achim, 67435 Neustadt (DE)
(74) Vertreter: BRP Renaud & Partner mbB Rechtsanwälte Patentanwälte Steuerberater

(56) Entgegenhaltungen:
- EP-A2- 1 422 489
- EP-A2- 2 236 896
- DE-A1-102006 048 290

## Beschreibung

Die vorliegende Erfindung betrifft ein Verfahren zum Herstellen einer Anordnung, vorzugsweise für eine Temperiereinrichtung, mit einem Rohrkörper und einem mit dem Rohrkörper verbundenen Bauteil. Die Erfindung betrifft ferner eine solche Anordnung sowie eine Temperiereinrichtung, die eine solche Anordnung aufweist.

In zahlreichen Anwendungen ist es notwendig, einen Rohrkörper mit einem anderen Bauteil zu verbinden. Zu solchen Anwendungen gehört beispielsweise der Einsatz eines Rohrkörpers in einer Temperiereinrichtung, die der Temperierung eines Fluids und/oder eines Gegenstands dient, wobei der Rohrkörper beispielsweise von einem Fluid durchströmt wird. In solchen Anwendungen ist es üblich, den Rohrkörper und das Bauteil aus einem Metall, beispielsweise aus Aluminium herzustellen. Zum Verbinden des Rohrkörpers und des Bauteils kommen gewöhnlich stoffflüssige Verbindungen zum Einsatz, indem der Rohrkörper beispielsweise mit dem Bauteil verschweißt bzw. verlötet wird. Nachteilig hierbei ist, dass solche Verbindungsarten sehr kosten- und ressourcenintensiv sind.

Aus der DE 102 54 797 B4 ist eine Anordnung eines Rohrkörpers eines Wärmetauschers mit einem Rohrboden aus Kunststoff bekannt, wobei die Anordnung als sogenannte "In-Mould-Assembly" ausgestaltet ist. Die Verbindung zwischen dem Rohrkörper und dem Rohrboden ist dadurch realisiert, dass der Rohrkörper eine Aufbördelung oder eine Sicke aufweist und in einer Gussform angeordnet wird, in die zur Herstellung des Rohrbodens ein aushärtbarer Kunststoff eingegossen wird. Nach dem Aushärten des Kunststoffes zur Ausbildung des Rohrbodens ist der Rohrkörper mit dem Rohrboden über die Aufbördelung bzw. Sicke in der Art eines Hinterschnitts formschlüssig verbunden.

Die DE 10 2006 048 290 A1 beschreibt ein Verfahren zum Herstellen eines Verbundbauteils mit Hilfe eines Kombinationswerkzeugs aus einen Innenhochdruckumformwerkzeug und einem Spritzgießwerkzeug. Dabei wird ein Rohrkörper in einer Gravur des Kombinationswerkzeugs angeordnet und durch Innenhochdruckumformen derart umgeformt, dass der Rohrkörper die Gravur ausfüllt. Ist dies geschehen, wird der Rohrkörper mit Kunststoff umspritzt.

Nachteilig bei einer solchen Anordnung ist, dass der Kunststoff beim Aushärten schrumpft bzw. schwindet. In der Folge wird eine Verbindung zwischen dem Rohrkörper und dem Rohrboden geschwächt bzw. instabil.

Die vorliegende Erfindung beschäftigt sich daher mit dem Problem, für eine Anordnung mit einem Rohrkörper und einem mit dem Rohrkörper verbundenen Bauteil sowie zur Herstellung einer solchen Anordnung und einer Temperiereinrichtung mit einer solchen Anordnung verbesserte oder zumindest andere Ausführungsformen anzugeben, die sich insbesondere durch eine erhöhte Stabilität auszeichnen.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung basiert auf dem Grundgedanken, bei der Herstellung einer Anordnung mit einem Rohrkörper und einem mit dem Rohrkörper verbundenen Bauteil, das durch das Einbringen eines verfestigbaren Kunststoffs in eine Gussform hergestellt wird, den Druck zwischen dem Rohrkörper und dem Kunststoff vor dem vollständigen Verfestigendes Kunststoffs zu erhöhen. Durch diese Maßnahme wird insbesondere einem Schwinden bzw. Schrumpfen des sich verfestigenden Kunststoffs entgegengewirkt. In der Folge ist die Verbindung zwischen dem Rohrkörper und dem aus dem verfestigbaren Kunststoff hergestellten Bauteil stabiler, was zu einer entsprechend besseren Dauerfestigkeit sowie Qualität der Anordnung führt.

Dem Erfindungsgedanken entsprechend, wird zum Herstellen des Bauteils also eine Gussform verwendet, in die zum Herstellen des Bauteils der verfestigbare Kunststoff eingebracht wird. Dabei wird ein Verbindungsabschnitt des Rohrkörpers, in dem die Verbindung zwischen dem Rohrkörper und dem Bauteil realisiert ist bzw. realisiert werden soll, in der Gussform angeordnet. Die Anordnung des Verbindungsabschnitts des Rohrkörpers in die Gussform erfolgt bevorzugt bevor der verfestigbare Kunststoff in die Gussform eingebracht wird. Vorstellbar ist es jedoch auch, den Verbindungsabschnitt nach dem Einbringen des Kunststoffs, jedoch vor dem Verfestigen des Kunststoffs, in der Gussform anzuordnen. Dabei wird der Druck zwischen dem Verbindungsabschnitt des Rohrkörpers und dem Kunststoff vor dem Verfestigen des Kunststoffs erhöht.

Der Rohrkörper kann hierbei aus einem beliebigen Werkstoff hergestellt sein, sofern er durch das Herstellen der Anordnung keine unerwünschten Schäden davonträgt. Der Rohrkörper kann also insbesondere aus einem Metall, beispielsweise aus Aluminium hergestellt sein. Vorstellbar ist es jedoch auch, ein Rohrkörper aus einem anderen Werkstoff, beispielsweise aus Kunststoff, zu verwenden.

Als Kunststoff kann jeder beliebige Kunststoff verwendet werden, der verfestigbar ist und zur Herstellung des Bauteils in die Gussform eingebracht werden kann.

Vorstellbar ist die Verwendung eines Thermoplasts als verfestigbarer Kunststoff. In diesem Fall wird der Thermoplast in die Gussform eingebracht, wobei der Druck zwischen dem Rohrkörper und dem Thermoplast vor dem Verfestigen des Thermoplasts, das heißt vor dem Abkühlen und/oder vor dem Erstarren des Thermoplasts, erhöht.

Möglich ist auch die Verwendung eines Duroplasts als verfestigbarer Kunststoff. In diesem Fall wird der Duroplast in die Gussform eingebracht, wobei der Druck zwischen dem Rohrkörper und dem Thermoplast vor dem Verfestigen des Duroplasts, das heißt vor dem Aushärten des Duroplasts, erhöht wird. Selbstverständlich können auch Mischungen aus unterschiedlichen Kunststoffen verwendet werden, sofern die Mischung verfestigbar ist.

Die Erhöhung des Drucks zwischen dem Verbindungsabschnitt des Rohrkörpers und dem Kunststoff vor dem Verfestigen bzw. während dem Verfestigen des Kunststoffs kann auf beliebige Weise realisiert werden. Es ist insbesondere vorstellbar, das Volumen innerhalb der Gussform zu verkleinern, um eine entsprechende Erhöhung des Drucks zwischen dem Verbindungsabschnitt und dem Kunststoff zu erreichen. Die Erhöhung des Drucks erfolgt zwischen dem Verbindungsabschnitt und dem Kunststoff durch eine Vergrößerung eines Querschnitts des Rohrkörpers im Verbindungsabschnitt. Hierzu ist der Rohrkörper, insbesondere im Verbindungsabschnitt, deformierbar. Vorzugsweise ist der Verbindungsabschnitt hierzu plastisch deformierbar. Die Vergrößerung des Querschnitts des Verbindungsabschnitts zur Erhöhung des Drucks zwischen dem Verbindungsabschnitt und dem Kunststoff hat insbesondere den Vorteil, dass keine Bewegungen bzw. Anpassungen der Gussform notwendig sind. Hierdurch wird insbesondere vermieden, dass die Bewegung der Gussform entsprechende Formänderungen und/oder Strukturänderungen des Bauteils verursacht, die unerwünscht sind.

Die Vergrößerung des Querschnitts des Rohrkörpers erfolgt erfindungsgemäß durch eine Stauchung des Rohrkörpers. Eine Stauchung liegt insbesondere vor, wenn der Querschnitt des Rohrkörpers durch einen Kraftübertrag auf den Rohrkörper, insbesondere axial und/oder in Längserstreckung des Rohrkörpers, vergrößert wird. Dabei ist es vorstellbar, dass der Rohrkörper bereits vor der Stauchung zur Vergrößerung des Drucks zwischen dem Verbindungsabschnitt und dem Kunststoff gestaucht ist. Durch eine solche Stauchung kann insbesondere die mechanische Festigkeit des Rohrkörpers verbessert werden.. Selbstverständlich kann auch ein im Verbindungsabschnitt ungestauchter Rohrkörper zur Erhöhung des Drucks gestaucht werden. Durch die Stauchung des Rohrkörpers wird zusätzlich zur Erhöhung des Drucks zwischen dem Verbindungsabschnitt und dem Kunststoff ein Hinterschnitt geschaffen, der eine formschlüssige Verbindung zwischen dem Rohrabschnitt und dem Bauteil zur Folge hat.

Die Stauchung des Verbindungsabschnitts kann auf beliebige Weise erfolgen. Vorstellbar ist es beispielsweise, den Verbindungsabschnitt zur Stauchung mit der Gussform zusammenwirken zu lassen.

Bei weiteren bevorzugten Varianten kommt zur Vergrößerung des Querschnitts des Verbindungsabschnitts eine Expansionseinrichtung zum Einsatz, die im Verbindungsabschnitt im Rohrkörper angeordnet ist und zum Vergrößern des Querschnitts expandiert wird. Die Expansionseinrichtung kann beispielsweise in Form eines Kerns ausgestaltet sein, der zum Vergrößern des Querschnitts expandierbar ist. Die Verwendung einer solchen Expansionseinrichtung hat insbesondere den Vorteil, dass ein Zusammenwirken zwischen dem Rohrkörper bzw. dem Verbindungsabschnitt und der Gussform nicht notwendig ist.

Alternativ oder zusätzlich kann zum Vergrößern des Querschnitts ein Dorn zum Einsatz kommen, der zum Vergrößern des Querschnitts im Verbindungsabschnitt bewegt wird. Dabei kann ein Aufdornen des Verbindungsabschnitts dadurch erfolgen, dass der Dorn in den Verbindungsabschnitt axial eingeschoben wird.

Bei einer besonders bevorzugten Ausführungsform wird der zum Aufdornen verwendete Dorn oder ein anderer Dorn derart relativ zum Rohrkörper, insbesondere zum Verbindungsabschnitt, positioniert, dass beim Einbringen des verfestigbaren Kunststoffs in die Gussform, Kunststoff in einen zwischen dem Dorn und dem Verbindungsabschnitt ausgebildeten Spalt eindringt. Hierdurch kann zusätzlich zum durch das Aufdornen geschaffenen Hinterschnitt ein Hinterschnitt zwischen dem Verbindungsabschnitt und dem Bauteil durch den in den Spalt eindringenden Kunststoff realisiert werden, der die Verbindung zwischen dem Bauteil und dem Rohrkörper zusätzlich stabilisiert.

Besonders bevorzugt sind Ausführungsformen, bei denen der Dorn anschließend, d.h. nach dem Kunststoff in den Spalt eingedrungen ist, zum Erhöhen des Drucks zwischen dem Kunststoff und dem Verbindungsabschnitt zurück in den Rohrkörper eingeschoben wird. Hierdurch kann also mittels des Dorns einerseits ein zusätzlicher Hinterschnitt geschaffen und andererseits der Druck zwischen dem Kunststoff und dem Verbindungsabschnitt erhöht werden.

Die Anordnung des Dorns im Verbindungsabschnitt derart, dass ein Spalt zwischen dem Dorn und dem Verbindungsabschnitt entsteht, kann prinzipiell vor bzw. nach dem Einbringen des verfestigbaren Kunststoffs in die Gussform, jedoch vor dem Verfestigen des Kunststoffs erfolgen. Bevorzugt erfolgt diese Anordnung vor dem Einbringen des Kunststoffs in die Gussform, um eine dichtere Ausbildung des Bauteils zu erreichen.

Besonders bevorzugt kann der Dorn auch dazu verwendet werden, den Querschnitt des Verbindungsabschnitts zum Erhöhen des Drucks zwischen dem Verbindungsabschnitt und dem Kunststoff zu erhöhen. Auf diese Weise können weitere Komponenten zum Erhöhen des Drucks entfallen.

Grundsätzlich ist es bevorzugt, wenn das Bauteil und der Rohrkörper, insbesondere der Verbindungsabschnitt, durch einen Hinterschnitt miteinander verbunden sind. Ein solcher Hinterschnitt kann insbesondere durch eine solche Vergrößerung des Querschnitts des Verbindungsabschnitts erreicht werden. Der Hinterschnitt kann jedoch auch auf eine beliebige andere Weise realisiert sein. Es ist beispielsweise vorstellbar, das Bauteil bzw. die Gussform entsprechend zu formen.

Das Einbringen des verfestigbaren Kunststoffs in die Gussform erfolgt im Allgemeinen auf beliebige Art und Weise. Bei einer Möglichkeit kann der verfestigbare Kunststoff in die Gussform gegossen werden.

Bei einer weiteren Möglichkeit ist es vorstellbar, den verfestigbaren Kunststoff in die Gussform zu spritzen. Bei der Gussform kann es sich also um eine Spritzgussform handeln. Dabei ist es insbesondere vorstellbar, ein Spritzgussverfahren zu verwenden. Das heißt, dass das Bauteil durch ein Spritzgussverfahren hergestellt wird.

Zur Realisierung einer erhöhten Lebensdauer der Anordnung sowie einer Betriebsfestigkeit und Mediendichtigkeit der Anordnung kann eine entsprechende Ausgestaltung des Bauteils zum Einsatz kommen. Hierzu gehören insbesondere konstruktive Gestaltungen des Bauteils, die eine Entkopplung und/oder Flexibilität der Anordnung, insbesondere zwischen dem Rohrkörper und dem Bauteil, ermöglichen.

Beim Bauteil kann es sich prinzipiell um ein Beliebiges handeln. Insbesondere kann das Bauteil als ein Boden, beispielsweise Rohrboden, ausgebildet werden bzw. sein.

Die Anordnung mit dem Bauteil und dem Rohrkörper kann in einer beliebigen Anwendung eingesetzt werden.

Es ist beispielsweise vorstellbar, eine solche Anordnung in einer Temperiereinrichtung vorzusehen, die der Temperierung eines Fluids bzw. eines Gegenstandes dient, wobei der Rohrkörper von einem Fluid durchströmbar ist. Es ist also insbesondere vorstellbar, dass die Anordnung Teil eines Wärmetauschers ist. Dabei weist die Temperiereinrichtung wenigstens einen solchen Rohrkörper auf, wobei zumindest ein solcher Rohrkörper mit wenigstens einem Bauteil nach dem erfindungsgemäßen Verfahren zu einer solchen Anordnung verbunden ist.

Es versteht sich, dass neben dem erfindungsgemäßen Verfahren zum Herstellen einer solchen Anordnung und einer solchen Anordnung auch eine solche Temperiereinrichtung mit einer solchen Anordnung zum Umfang dieser Erfindung gehört.

Es ist ferner klar, dass die Anordnung zwei oder mehrere Bauteile aufweisen kann, wobei wenigstens eines der Bauteilte erfindungsgemäß mit dem Rohrkörper verbunden ist. Alternativ oder zusätzlich ist es vorstellbar, dass die Anordnung zwei oder mehrere Rohrkörper aufweist, wobei wenigstens einer der Rohrkörper erfindungsgemäß mit dem Bauteil verbunden ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: einen Schnitt durch eine Temperiereinrichtung,
- Fig. 2 bis 4: Schnitte bei unterschiedlichen Verfahrensschritten zur Herstellung einer Anordnung,
- Fig. 5 und 6: Schnitte bei unterschiedlichen Verfahrensschritten zur Herstellung der Anordnung anderer Ausführungsformen,
- Fig. 7 und 8: Schnitte bei verschiedenen Verfahrensschritten zur Herstellung der Anordnung einer weiteren Ausführungsform.

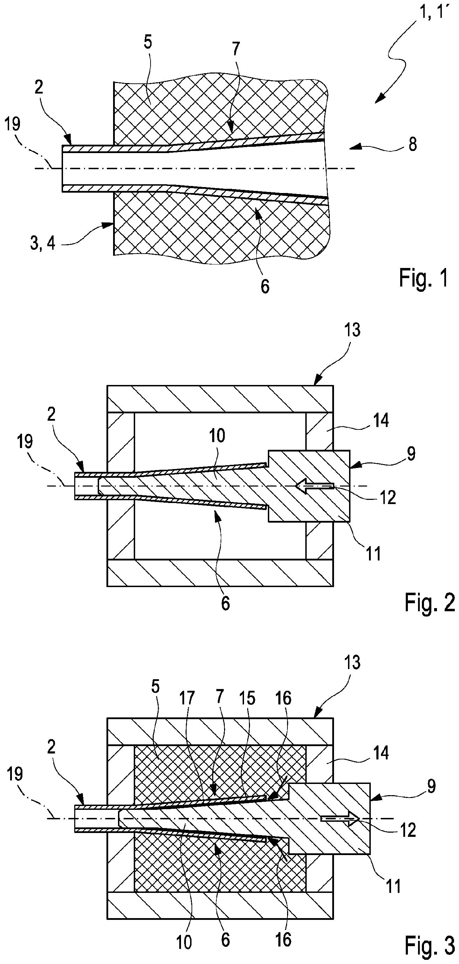

Fig. 1 zeigt einen Schnitt durch eine Temperiereinrichtung 1, die ausschnittsweise gezeigt ist. Die Temperiereinrichtung 1 ist beispielsweise als ein Wärmetauscher 1' ausgestaltet und weist einen Rohrkörper 2 auf, durch den ein Fluid strömen kann. Der Rohrkörper 2 ist mit einem Bauteil 3 verbunden, das im gezeigten Beispiel als ein Rohrboden 4 oder kurz Boden 4 ausgebildet ist. Das Bauteil 3 ist aus einem flexiblen Kunststoff 5 hergestellt und über einen Verbindungsabschnitt 6 des Rohrkörpers 2 mit dem Rohrkörper 2 verbunden. Die Verbindung des Bauteils 3 mit dem Verbindungsabschnitt 6 ist hierbei über einen Hinterschnitt 7 realisiert. Dabei bilden der Rohrkörper 2 und das damit verbundene Bauteil 3 eine Anordnung 8 der Temperiereinrichtung 1.

In den Fig. 2 bis 4 sind unterschiedliche Verfahrensschritte zum Herstellen einer solchen Anordnung 8 dargestellt. Beim in Fig. 2 gezeigten Verfahrensschritt wird der Rohrkörper 2 mit Hilfe eines Dorns 9 aufgedornt. Der Dorn 9 weist einen Grundkörper 10 zum Einschieben in den Rohrkörper 2 und einen Endkörper 11 auf, der einen Anschlag bildet. Zum Aufdornen des Rohrkörpers 2 wird, wie in Fig. 2 mit einem Pfeil 12 angedeutet, der Grundkörper 10 in den Rohrkörper 2 eingeschoben, bis der Endkörper 11 an den Rohrkörper 2 anschlägt. Hierdurch weist der Verbindungsabschnitt 6 einen aufgeweiteten Querschnitt 18 auf, dessen bezüglich einer Achse 9 des Rohrkörpers 2 radiale Erstreckung zu sehen ist.

Zum Herstellen des Bauteils 3 kommt eine Gussform 13 zum Einsatz, in die der Kunststoff 5 zum Herstellen des Bauteils 3 eingebracht wird. Dabei wird der Kunststoff 5 in verfestigbarem Zustand in die Gussform 13 eingebracht. Durch das Verfestigen des verfestigbaren Kunststoffs 5 entsteht das Bauteil 3 in der Gussform 13. Das Einbringen des Kunststoffs 5 in die Gussform 13 erfolgt beispielsweise durch das Gießen des Kunststoffs 5, insbesondere durch Spritzgießen des Kunststoffs 5, in die Gussform 13.

Als verfestigbarer Kunststoff 5 kann ein Thermoplast verwendet werden, der bei beim Verfestigen Erstarrt. Auch die Verwendung eines Duroplasts, der beim Verfestigen aushärtet, ist vorstellbar.

Das Aufweiten des Verbindungsabschnitts 6 des Rohrkörpers 2 mittels des Dorns 9 kann in der Gussform 13 oder außerhalb der Gussform 13 erfolgen. Wie in Fig. 2 zu erkennen ist, sind der aufgeweitete Rohrkörper 2 bzw. Verbindungsabschnitt 6 und der Dorn 9 in der Gussform 13 angeordnet, so dass das Aufweiten des Verbindungsabschnitts 6 in diesem Beispiels in der Gussform 13 erfolgt. Wie ferner in Fig. 2 erkennbar ist, ist der Grundkörper 11 des Dorns 9 in einer Seitenwand 14 der Gussform 13 verschiebbar angeordnet.

In Fig. 3 ist ein Verfahrensschritt dargestellt, bei der der Kunststoff 5 in die Gussform 13 eingebracht wurde, jedoch nicht ausgehärtet ist. In Fig. 3 ist ferner zu erkennen und mit dem Pfeil 12 angedeutet, dass der Dorn 19 im Vergleich zu den in Fig. 2 gezeigten Darstellungen etwas aus dem Rohrkörper 2 hinausgezogen ist. Auf diese Weise kann Kunststoff 5 in einen zwischen dem Grundkörper 10 des Dorns 9 und dem im Verbindungsabschnitt 6 des Rohrkörpers 2 entstehenden Spalt 15 eindringen, wie durch die Pfeile 16 angedeutet ist. Hierdurch wird zusätzlich zum durch die Aufweitung des Verbindungsabschnitts 6 erreichten Hinterschnitt 7, im Spalt 15 ein weiterer Hinterschnitt 17 zwischen dem Rohrkörper 2 und dem Bauteil 3 hergestellt, so dass die Verbindung zwischen dem Rohrkörper 2 und dem Bauteil 3 verstärkt wird.

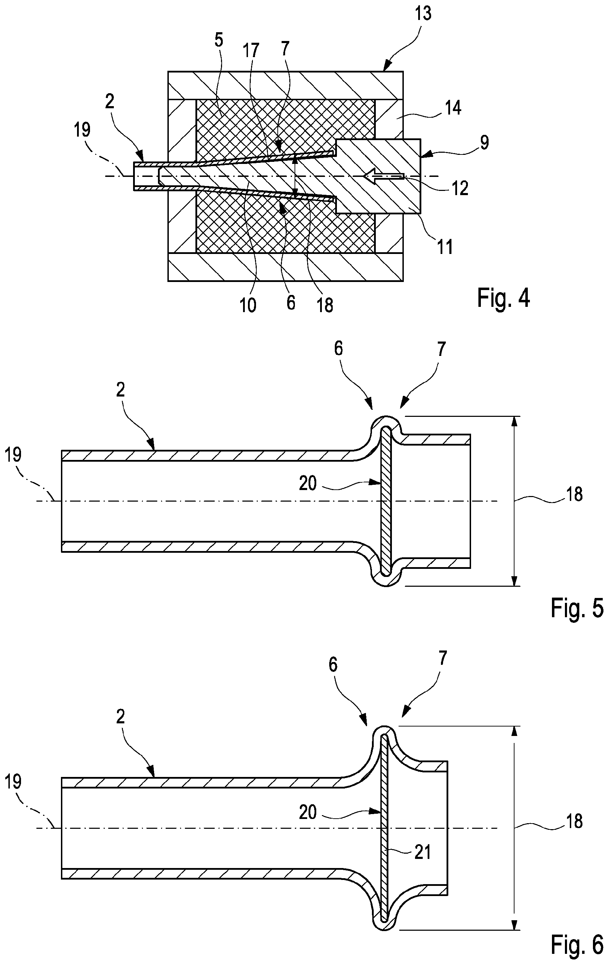

Entsprechend Fig. 4 wird der Dorn 9 vor dem Verfestigen des Kunststoffs 5 anschließend wieder in den Rohrkörper 2 hineingeschoben, wie mit dem Pfeil 12 angedeutet. Hierdurch wird der Spalt 15 verkleinert und der Druck zwischen dem Verbindungsabschnitt 6 und dem Kunststoff 5 im Spalt 15 erhöht. Auch der Druck zwischen dem Verbindungsabschnitt 6 und dem Kunststoff 5 außerhalb des Spaltes 15 wird dadurch erhöht, dass der Querschnitt 18 des Rohrkörpers 2 in Verbindungsabschnitt 6 vergrößert wird. Die Erhöhung des Drucks zwischen dem Verbindungsabschnitt 6 und dem Kunststoff 5 vor dem Verfestigen des Kunststoffs 5 wirkt einer Schwindung bzw. einem Schrumpfen des Kunststoffs 5, die insbesondere durch das Verfestigen des Kunststoffs 5 bedingt ist, entgegen. Auch hierdurch wird die Verbindung zwischen dem Kunststoff 5 und somit dem Bauteil 3 und dem Verbindungsabschnitt 6 bzw. dem Rohrkörper 2 stabilisiert und/oder verstärkt.

In den Fig. 5 und 6 ist eine Alternative zum Vergrößern des Querschnitts 18 des Verbindungsabschnitts 6 des Rohrkörpers 2 dargestellt. Hierzu kommt eine Expansionseinrichtung 20 zum Einsatz, die zur Aufweitung des Rohrkörpers 2 im Verbindungsabschnitt 6 zur Realisierung eines solchen Hinterschnitts 7 zum Einsatz kommen kann. Die Expansionseinrichtung 20 wird nach dem Einbringen des in den Fig. 5 und 6 nicht gezeigten Kunststoffs 5 und vor dem Verfestigen des Kunststoffs 5 expandiert. Der expandierte Zustand der Expansionseinrichtung 20 ist in Fig. 6 dargestellt. Dabei ist zu erkennen, dass ein Kern 21 der Expansionseinrichtung 20 expandiert wird, um den Querschnitt 18 des Rohrkörpers 2 im Verbindungsabschnitt 6 zu vergrößern. Hierdurch wird einerseits der Hinterschnitt 7 vergrößert und andererseits der Druck zwischen dem Rohrkörper 2 im Verbindungsabschnitt 6 und dem Kunststoff 5 erhöht.

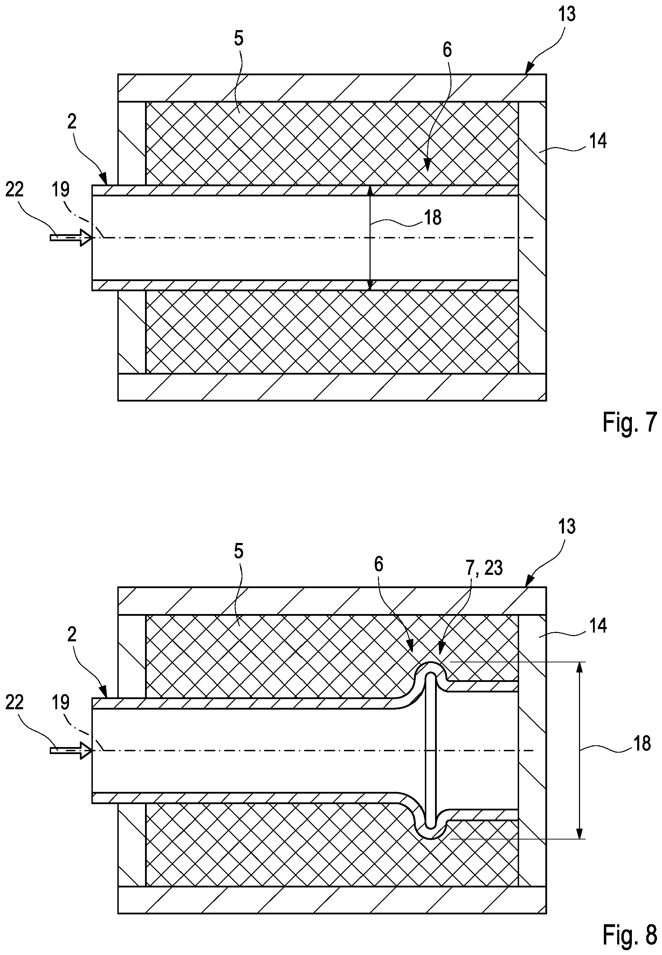

Die Fig. 7 und 8 zeigen eine weitere Variante zur Erhöhung des Drucks zwischen dem Verbindungsabschnitt 6 des Rohrkörpers 2 und dem Kunststoff 5 vor dem Verfestigen des Kunststoffs 5. Entsprechend Fig. 7 ist der Verbindungsabschnitt 6 des Rohrkörpers 2 beim Einbringen des verfestigbaren Kunststoffs 5 in die Gussform 13 in der Gussform 13 angeordnet. Entsprechend Fig. 8 wird der Rohrkörper 2, insbesondere der Verbindungsabschnitt 6, nach dem Einbringen des Kunststoffs 5, jedoch vor dem Verfestigen des Kunststoffs 5, gestaucht, wie durch einen Pfeil 22 angedeutet ist. Hierdurch entsteht im Verbindungsabschnitt 6 eine Stauchung 23 des Rohrkörpers 2, die einerseits den Druck zwischen dem Verbindungsabschnitt 6 und dem Kunststoff 5 erhöht und anderseits einen solchen Hinterschnitt 7 ausbildet. Hierzu ist ein Ende des Verbindungsabschnitts 6 des Rohrkörpers 2 an der Seitenwand 14 der Gussform 13 angelegt.

## Patentansprüche

1. Verfahren zum Herstellen einer Anordnung (8), vorzugsweise für eine Temperiereinrichtung (1), mit einem Rohrkörper (2) und einem mit dem Rohrkörper (2) verbundenen Bauteil (3), wobei
a) zum Herstellen des Bauteils (3) eine Gussform (13) verwendet wird,
b) ein Verbindungsabschnitt (6) des Rohrkörper (2) zum Verbinden des Rohrkörpers (2) mit dem Bauteil (3) in der Gussform (13) angeordnet wird,
c) ein verfestigbarer Kunststoff (5) zum Herstellen des Bauteils (3) in die Gussform (13) eingebracht wird,
**dadurch gekennzeichnet, dass**
d) vor dem Verfestigen des Kunststoff (5) der Druck zwischen dem Verbindungsabschnitt (6) und dem Kunststoff (5) erhöht wird,
der Druck in Schritt d) dadurch erhöht wird, dass ein Querschnitt (18) des Rohrkörpers (2) im Verbindungsabschnitt (6) vergrößert wird, der Querschnitt (18) durch eine Stauchung (23) des Rohrkörpers (2) im Verbindungsabschnitt (6) vergrößert wird.

2. Verfahren nach Anspruch 1,
**dadurch gekennzeichnet,**
**dass** der Querschnitt (18) durch eine im Verbindungsabschnitt (6) im Rohrkörper (2) angeordnete Expansionseinrichtung (20) vergrößert wird, die zum Vergrößern des Querschnitts (18) expandiert wird.

3. Verfahren nach Anspruch 1 oder 2,
**dadurch gekennzeichnet,**
**dass** der Querschnitt (18) des Rohrkörpers (2) im Verbindungsabschnitt (6) durch ein Aufdornen des Rohrkörpers (2) vergrößert wird.

4. Verfahren nach einem der Ansprüche 1 bis 3,
**dadurch gekennzeichnet,**
**dass** ein Dorn (9) vor und/oder nach dem Einbringen des verfestigbaren Kunststoffs (5) in die Gussform (13) derart im Verbindungsabschnitt (6) des Rohrkörpers 82) angeordnet wird, dass Kunststoff (5) in einen zwischen dem Dorn (9) und dem Rohkörper (2) angeordneten Spalt (15) eindringt.

5. Verfahren nach Anspruch 4,
**dadurch gekennzeichnet,**
**dass** der Dorn (9) anschließend zum Erhöhen des Drucks zwischen dem Kunststoff (5) und dem Verbindungsabschnitt (6) in den Rohrkörper (2) eingeschoben wird.

6. Verfahren nach einem der Ansprüche 1 bis 5,
**dadurch gekennzeichnet,**
**dass** das Verfahren derart durchgeführt wird, dass der Rohrkörper (2) und das Bauteil (3) durch einen Hinterschnitt (7, 17) miteinander verbunden werden.

7. Verfahren nach einem der Ansprüche 1 bis 6,
**dadurch gekennzeichnet,**
**dass** der Kunststoff (5) in die Gussform gegossen wird.

8. Verfahren nach einem der Ansprüche 1 bis 7,
**dadurch gekennzeichnet,**
**dass** der Kunststoff (5) in die Gussform gespritzt wird.

9. Verfahren nach einem der Ansprüche 1 bis 8,
**dadurch gekennzeichnet,**
**dass** als verfestigbarer Kunststoff ein Thermoplast verwendet wird.

10. Verfahren nach einem der Ansprüche 1 bis 9,
**dadurch gekennzeichnet,**
**dass** ein aus Aluminium hergestellter Rohrkörper verwendet wird.

## Claims

1. Method for manufacturing an arrangement (8), preferably for a tempering device (1), with a tube body (2) and a component (3) connected to the tube body (2), wherein
a) a mould (13) is used to manufacture the component (3),
b) a connection portion (6) of the tube body (2) is arranged in the mould (13) to connect the tube body (2) with the component (3),
c) a plastic (5), which can be solidified, is introduced into the mould (13) to manufacture the component (3), **characterised in that**
d) the pressure between the connection portion (6) and the plastic (5) is increased prior to solidifying the plastic (5), the pressure is increased in step d) such that a cross-section (18) of the tube body (2) is increased in the connection portion (6), the cross-section (18) is increased by a compression (23) of the tube body (2) in the connection portion (6).

2. Method according to claim 1,
**characterised in that**,
the cross-section (18) is increased by an expansion device (20) arranged in the connection portion (6) in the tube body (2), said expansion device is expanded in order to increase the cross-section (18).

3. Method according to claim 1 or 2,
**characterised in that**,
the cross-section (18) of the tube body (2) is increased in the connection portion (6) by flaring the tube body (2).

4. Method according to any one of claims 1 to 3,
**characterised in that**,
a mandrel (9) is arranged in the connection portion (6) of the tube body (82) prior to and/or after introducing the plastic (5), which can be solidified, into the mould (13) such that plastic (5) penetrates into a gap (15) arranged between the mandrel (9) and the tube body (2).

5. Method according to claim 4,
**characterised in that**,
the mandrel (9) is subsequently pushed into the tube body (2) to increase the pressure between the plastic (5) and the connection portion (6).

6. Method according to any one of claims 1 to 5,
**characterised in that**,
the method is performed such that the tube body (2) and the component (3) are connected to each other by an undercut (7, 17).

7. Method according to any one of claims 1 to 6,
**characterised in that**,
the plastic (5) is cast into the mould.

8. Method according to any one of claims 1 to 7,
**characterised in that**,
the plastic (5) is injected into the mould.

9. Method according to any one of claims 1 to 8,
**characterised in that**,
a thermoplastic is used as the plastic which can be solidified.

10. Method according to any one of claims 1 to 9,
**characterised in that**,
a tube body manufactured from aluminium is used.

## Revendications

1. Procédé de fabrication d'un système (8), de préférence pour un dispositif d'équilibrage de température (1), avec un corps tubulaire (2) et un composant (3) raccordé au corps tubulaire (2), dans lequel
a) pour la fabrication d'un composant (3) un moule (13) est utilisé,
b) une section de raccordement (6) du corps tubulaire (2) est agencée pour le raccordement du corps tubulaire (2) avec le composant (3) dans le moule (13),
c) une matière plastique (5) solidifiable pour la fabrication du composant (3) est introduite dans le moule (13),
**caractérisé en ce que**
d) avant la solidification de la matière plastique (5) la pression entre la section de raccordement (6) et la matière plastique (5) est augmentée,
la pression à l'étape d) est augmentée du fait qu'une section transversale (18) du corps tubulaire (2) est agrandie dans la section de raccordement (6),
la section transversale (18) est agrandie par une compression (23) du corps tubulaire (2) dans la section de raccordement (6).

2. Procédé selon la revendication 1,
**caractérisé en ce que**
la section transversale (18) est agrandie par un dispositif d'expansion (20) agencé dans la section de raccordement (6) dans le corps tubulaire (2), qui est expansé pour l'agrandissement de la section transversale (18).

3. Procédé selon la revendication 1 ou 2,
**caractérisé en ce que**
la section transversale (18) du corps tubulaire (2) dans la section de raccordement (6) est agrandie par un mandrinage du corps tubulaire (2).

4. Procédé selon l'une quelconque des revendications 1 à 3,
**caractérisé en ce que**
un mandrin (9) est agencé avant et/ou après l'introduction de la matière plastique (5) solidifiable dans le moule (13) dans la section de raccordement (6) du corps tubulaire (82) de telle manière que la matière plastique (5) pénètre dans une fente (15) agencée entre le mandrin (9) et le corps tubulaire (2).

5. Procédé selon la revendication 4,
**caractérisé en ce que**
le mandrin (9) est ensuite poussé pour l'augmentation de la pression entre la matière plastique (5) et la section de raccordement (6) dans le corps tubulaire (2).

6. Procédé selon l'une quelconque des revendications 1 à 5,
**caractérisé en ce que**
le procédé est réalisé de telle manière que le corps tubulaire (2) et le composant (3) soient raccordés l'un à l'autre par une contre-dépouille (7, 17).

7. Procédé selon l'une quelconque des revendications 1 à 6,
**caractérisé en ce que**
la matière plastique (5) est coulée dans le moule.

8. Procédé selon l'une quelconque des revendications 1 à 7,
**caractérisé en ce que**
la matière plastique (5) est injectée dans le moule.

9. Procédé selon l'une quelconque des revendications 1 à 8,
**caractérisé en ce que**
un thermoplaste est utilisé comme matière plastique solidifiable.

10. Procédé selon l'une quelconque des revendications 1 à 9,
**caractérisé en ce que**
un corps tubulaire fabriqué en aluminium est utilisé.
